# EUROPÄISCHE PATENTSCHRIFT

(11) **EP 2 000 285 B1**
(45) Veröffentlichungstag und Bekanntmachung des Hinweises auf die Patenterteilung: **29.02.2012**
(21) Anmeldenummer: 08010227.0
(22) Anmeldetag: 05.06.2008
(51) Int. Cl.: B29C 49/64, B29C 49/42, B29C 49/06, B29C 49/12, B29C 49/36, B29C 49/60

(54) **Vorrichtung zum Herstellen und Kühlen von Kunststoffhohlkörpern**
Device for manufacturing and cooling plastic hollow bodies
Dispositif de fabrication et de refroidissement de corps creux en matière synthétique

(30) Priorität: 06.06.2007 DE 202007008120 U
(43) Veröffentlichungstag der Anmeldung: 10.12.2008
(73) Patentinhaber: Krones AG, 93073 Neutraubling (DE)
(72) Erfinder: Zierer, Martin, 93179 Brennberg (DE); Heilmeier, Robert, 94372 Strasskirchen/Paitzkofen (DE)

(56) Entgegenhaltungen:
- EP-A- 0 606 496
- WO-A-2006/050935
- DE-A1- 19 928 325
- DE-A1-102004 023 419
- DE-A1-102005 015 565
- DE-A1-102006 053 193
- DE-U1-202007 008 120
- US-A1- 2007 235 906

## Beschreibung

Die Vorrichtung betrifft eine Maschinenanordnung zur Herstellung von Kunststoffhohlkörpern, insbesondere zur Herstellung von Kunststoffhohlkörpern in der Getränkeindustrie, die besondere Anforderungen erfüllen müssen. Solche Behälter werden z.B. für Getränke, insbesondere kohlensäurehaltige Getränke verwendet. Inzwischen werden immer höhere Maschinenleistungen realisiert, was zu bestimmten Problemen führt. Beim bekannten Streckblasen, bei dem die Vorformlinge erwärmt, in einer Blasmaschinen gegen eine Form mit Hochdruck aufgeblasen und später in einem Füller gefüllt werden, besteht ein Nachteil der hohen Maschinenleistungen darin, dass die Flaschen, während sie an der Behälterform anliegen, nicht mehr genügend Zeit haben, die Wärme über die Formwand abzuführen. Dies führt zu Rückschrumpfuhgen oder zu Flascheninstabilitäten. Aus diesem Grund ist es bekannt, nach einer Blasmaschine eine Behälternachbehandlung anzuschließen, wobei die Flasche, insbesondere der Boden, von außen und/oder von innen mittels eines Fluids gekühlt wird.

So ist z.B. aus der DE 10 2004 023 419 A1 ein Verfahren und eine Vorrichtung zum Abkühlen von frisch geblasenen Kunststoffflaschen bekannt, wobei die Behälter zwischen der Blasmaschine und dem Füller einen Kühltunnel durchlaufen, in dem den Flaschen Wärme durch das "Kühlschrankprinzip" entzogen wird. Dieses Verfahren hat den Nachteil, dass es sehr aufwändig und sehr teuer ist.

Aus der WO 2006 / 050 935 ist eine Vorrichtung bekannt, die auf einem Transporteur nach einer Blasmaschine angeordnet ist und verschiedene Arten von Behälternachbehandlungseinheiten wie z.B. Behälterkühleinheiten aufweisen kann. Hier werden die Behälter mittels stationären Düsen, aus denen ein Kühlmedium austritt, gekühlt.

Es sind auch bereits andere Verfahren zum Kühlen von Behältern nach Blasmaschinen bekannt, so z.B. Verfahren, bei denen die Behälterböden von unten mittels Luft oder Wasser beaufschlagt werden, wobei die Beaufschlagung durch Spritzdüsen erfolgt. Diese bekannte Düsenanordnung hat den Nachteil, dass eine erhöhte Aerosolbildung vorliegt, was zur Beaufschlagung der Behälter an unerwünschten Stellen mit Flüssigkeit führt; es kann sogar sein, dass Kühlflüssigkeit in die Behälter gelangt.

Es ist deshalb Aufgabe der vorliegenden Erfindung, die vorstehenden Nachteile abzustellen und eine konstruktiv einfache und billige Lösung darzubieten, wobei gleichzeitig eine Aerosolbildung beim Prozess des Kühlens reduziert werden soll.

Erfindungsgemäß wird diese Aufgabe durch die Merkmale des Anspruchs 1 gelöst.

Die Vorrichtung weist eine Streckblasmaschine zum Herstellen von Kunststoffhohlkörpern, insbesondere Flaschen aus Vorformlingen auf, wobei die Vorformlinge vor dem Blasvorgang erhitzt werden. Nach dem Blasen werden die fertigen Behälter aus der Blasmaschine mittels eines Transporteurs zu einer Füllmaschine transportiert, wobei in dem Transporteur der Bodenbereich der Kunststoffbehälter gekühlt wird. Die Kühlung erfolgt mittels eines Kühlfluids, das in einem Rohr geführt wird, das sich unterhalb des Bodens der Behälter im Transporteur befindet. Das Rohr weist dabei Bohrungen auf, durch die das Kühlfluid in Richtung des Bodens der Behälter treten kann. Die Bohrungen sind dabei vorzugsweise so ausgebildet, dass das Fluid möglichst frei hindurchtreten kann. Dies bedeutet erfindungsgemäß, dass die Bohrungen nicht als Düsen ausgebildet sind, die das hindurchtretende Fluid beim Austritt beschleunigen bzw. die dessen Druck erhöhen.

Erfindungagemäß ist das Rohr als Flüssigkeitsrohr ausgebildet, in dem vorzugsweise Wasser, insbesondere Sterilwasser geführt wird.

Vorzugsweise weist der Transporteur Klammern auf, die die Behälter zumindest teilumfänglich umgreifen. Dabei ist ein Umgreifen am Rumpf, insbesondere aber auch im Halsbereich der Behälter vorstellbar.

Eine bevorzugte Weiterbildung der Erfindung besteht darin, dass die Hohlkörper im Bereich des Transporteurs linear geführt werden. Linear bedeutet dabei auch, dass der Transporteur eine Richtungsänderung z.B. im Winkel von 90° vornehmen darf. Die Hauptführung ist aber linear.

Im Gegensatz dazu besteht eine weitere Ausführungsform darin, den Transportweg im Tansporteur mäanderförmig auszubilden. Vorzugsweise entsteht diese mäanderförmige Bewegungsform dadurch, dass die Behälter von Sternrädern entlang einer Bewegungsbahn geführt werden. Durch diese Teilkreisstrecken durch die Sternräder entsteht eine mäanderförmige Bewegungsbahn.

Die Streckblasmaschine ist vorzugsweise als Rotationsstreckblasmaschine ausgebildet und ist mit dem Transporteur und dem Füller synchron verblockt.

Die Behälter werden von der Blasmaschine über den Transporteur bis zum Füller bevorzugt an deren Halsbereich geführt.

Diese Ausführungsformen und weitere Details werden anhand der beiliegenden Figuren näher erläutert.

Dabei zeigt:
- Fig. 1: eine Draufsicht auf eine Maschinenanordnung zum Herstellen und Füllen von Kunststoffbehältern,
- Fig. 2: eine Draufsicht auf einen erfindungsgemäßen Transporteur,
- Fig. 2a: eine isometrische Ansicht eines Transporteurs gemäß Fig. 2
- Fig. 3a: eine isometrische Ansicht einer anderen Ausführungsform eines Transporteurs,
- Fig. 3b: eine Draufsicht auf einen Transporteur gemäß Fig. 3a und
- Fig. 3c: eine Seitenansicht eines Transporteurs gemäß Fig. 3a.

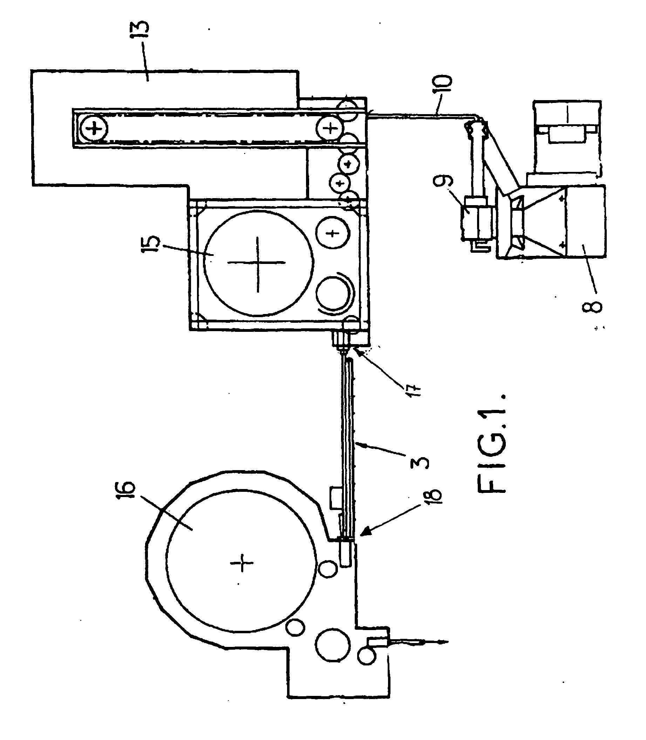

Fig. 1 zeigt eine Maschinenanordnung zum Herstellen von Behältern aus Vorformlingen mit einer Vorformlingsspeichereinrichtung 8, einer Vorformlingsvereinzelungseinrichtung 9, einer Zuführeinrichtung 10, einem Heizofen 13 zum Erwärmen der Vorformlinge, einer Blasmaschine 15 zum Herstellen der Behälter, einem Transporteur 3 zum Transportieren der Behälter vom Ausgang 17 der Streckblasmaschine 15 zum Eingang 18 eines Füllern 16.

In der Speichereinrichtung 8 werden viele Vorformlinge gespeichert und von dort aus zur Vereinzelungseinrichtung 9 transportiert, die die Vorformlinge vereinzelt und ausrichtet, um sie dann mittels der Zuführeinrichtung 10 gerichtet und in Linie dem Prozess zuführen zu können. Im Ofen 13 werden die Vorformlinge auf eine erhöhte Temperatur (ca. 110°C) gebracht, um sie dann in der Streckblasmaschine 15 mittels Hochdruckeinwirkung und einer Reckstange zu einem Behälter ausformen zu können.

Die hergestellten Behälter werden mittels des Transporteurs 3 zum Füller 16 transportiert, wo sie befüllt werden. Da die Behälter, die aus der Streckblasmaschine 15 kommen, noch zu warm sind, um sie sofort im Füller 16 füllen zu können, ist der Transporteur 3 mit einer Kühleinheit ausgestattet.

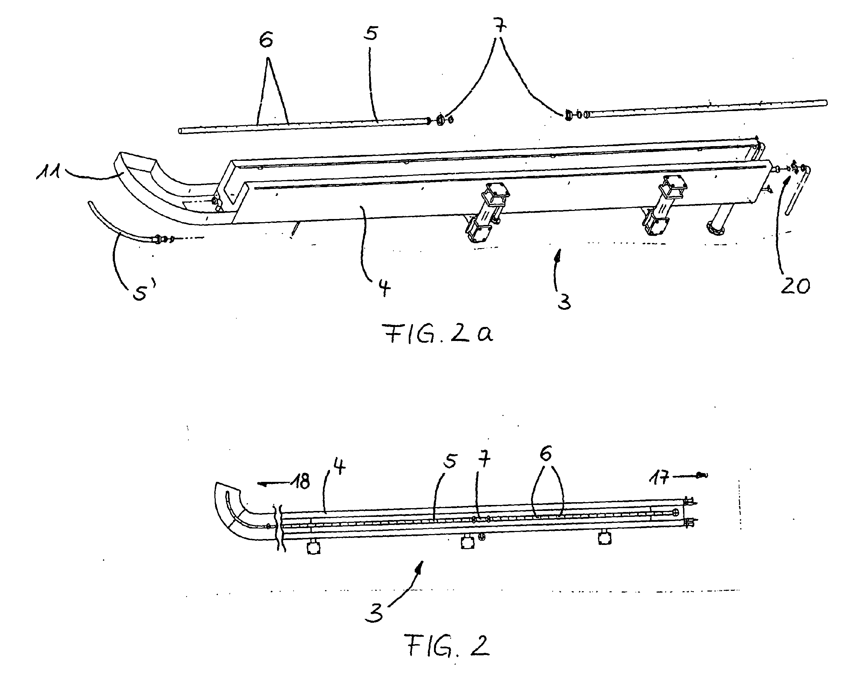

Fig. 2 zeigt eine Draufsicht auf eine erfindungsgemäße Ausgestaltung des Transporteurs 3, wobei die Transporteinheiten an und für sich (z.B. Klammern) nicht zu sehen sind. In der Draufsicht ist vielmehr das lineare Gehäuse 4 zu sehen, das sich vom hier nicht zu sehenden Ausgang 17 der Streckblasmaschine bis zum ebenfalls hier nicht zu sehenden Eingang 18 des Füllers erstreckt. Das Gehäuse 4 ist in etwa U-förmig ausgebildet, so dass sich jeweils eine Wand links und rechts der Wandung des zu transportierenden Behälters sowie eine Wand unterhalb des Bodens des Behälters befindet. Innerhalb des Gehäuses 4 befindet sich über dem waagrechten Boden des Gehäuses 4 ein Rohr 5 mit äquidistant zueinander angeordneten Bohrungen. Die Rohre 5 sind bezüglich ihrer Länge modulartig ausgebildet, so dass, je nach Länge des Transporteurs 4, entweder ein oder mehrere Rohre 5 miteinander verbunden werden können. Die Rohre sind untereinander mit Verbindungen 7 gekoppelt.

Je nach Anordnung des Füllers 16 bzw. der Streckblasmaschine 15 kann der Transporteur 3 in einer Linie zwischen beiden Maschinen angeordnet sein, er kann jedoch auch ein Kurvenstück 11 aufweisen, um die beiden Maschinen optimal miteinander zu verbinden. Das Kurvenstück 11 kann je nach Bedürfnis auch mit einem Rohr 5' zur Kühlung der Böden der Behälter ausgestattet sein.

Eingangsseitig von der Streckblasmaschine 15 ist der Transporteur 3 mit einem Medienanschluss 20 versehen, der das Rohr mit dem jeweiligen Kühlmedium versorgt. Die Bohrungen 6 im Rohr 5 sind hier leicht länglich quer zur Transportrichtung der Behälter im Transporteur 3 angeordnet. Da dies nur eine von vielen möglichen Ausgestaltungsvariationen ist, können die Bohrungen 6 auch rund, oval, rechteckig oder dgl. sein.

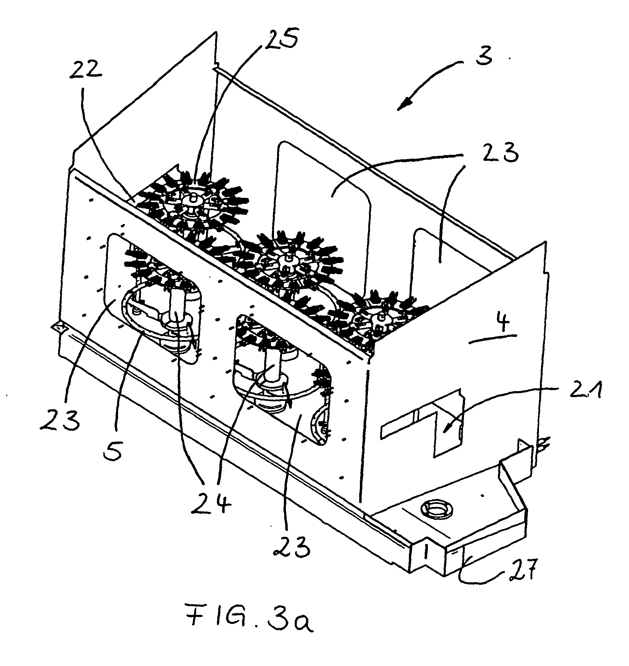

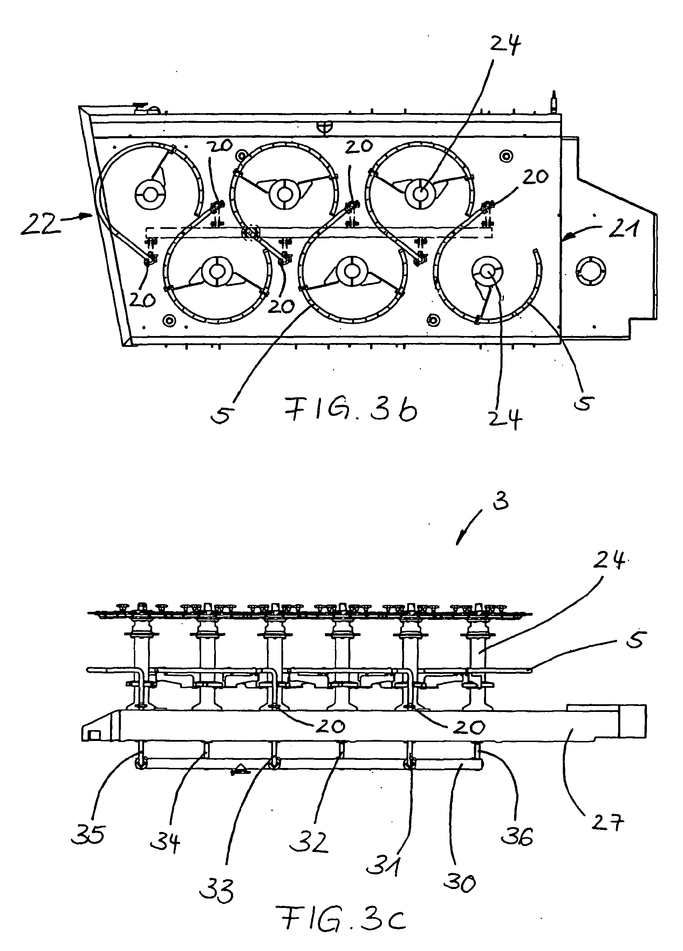

Fig. 3a zeigt eine isometrische Ansicht einer weiteren Ausführungsform eines Transporteurs 3 gemäß der Erfindung. Der Transporteur 3 weist ein Gehäuse 4 auf, das so ausgebildet ist, dass es dicht verschlossen werden kann. An den Längsseiten des Gehäuses 4 sind jeweils zwei Fenster 23 angebracht, durch die hindurch der Prozess von außen beobachtet werden kann. An den Querseiten des Transporteurs 3 weist das Gehäuse 4 in Richtung der Streckblasmaschine 15 einen Transporteureingang 21, in Richtung zum Füller 16 einen Transporteurausgang 22 auf. Der Transporteur 3 gemäß Fig. 3a bis 3c ist als Sternradtransporteur aufgebaut, wobei an sechs senkrechten Sternsäulen 24 jeweils ein Sternrad 25 mit jeweils sechzehn radial nach außen, äquidistant zueinander angeordneten Klammern 26 angebracht ist. Die Sternräder sind jeweils synchron zueinander geschaltet, um einen reibungslosen Transport vom Transporteureingang 21 zum Transporteurausgang 22 zu gewährleisten. Die Klammern 26 der Sternräder können aktiv und/oder passiv gesteuerte Klammern 26 sein. Es sind hier auch die Rohre 5 zu sehen, die sich in einem Abstand in Richtung der Bodenplatte parallel zu den Sternrädern 25 befinden. Die Sternräder 25 sind auf den Sternsäulen 24 dabei so angebracht, dass die Behälter beim Transport von einem Sternrad direkt zu einem anderen Sternrad übergeben werden.

Die Draufsicht 3b auf den Transporteur 3 zeigt die sechs parallel zueinander angeordneten Sternsäulen 24, wobei eine Sternsäule 24 jeweils das Zentrum für die in etwa kreisförmig angeordneten Rohre 5 dient. Um jede Sternsäule 24 ist jeweils ein Rohr 5 mit einem eigenen Medienanschluss 20 versehen. Dies wird notwendig, da sonst der Mediendruck vom Transporteureingang 21 bis zum Transporteurausgang 22 nicht aufrechterhalten werden kann, da die Transportstrecke zu lang werden würde. Dies ist die Konsequenz daraus, dass die Bohrungen 6 nicht als Düsen ausgebildet sind, die den Druck in den Rohren 5 nicht zu stark abfallen lassen würde. Durch die nicht düsenartige Ausgestaltung der Bohrungen 6 geht pro Rohrabschnitt, in dem sich eine Bohrung befindet, erheblicher Mediendruck verloren. Dadurch müssen die Rohrabschnitte zwischen zwei Medienanschlüssen relativ kurz gehalten werden.

Fig. 3c zeigt eine Seitenansicht des Transporteurs 3. Es ist zu sehen, dass die sechs Sternsäulen 24 auf einer Bodenplatte 27 angebracht sind, wobei sich die Sternsäulen 24, die Rohre 5, sowie das hier nicht gezeigte Gehäuse 4 oberhalb der Bodenplatte 27 befinden. Unterhalb der Bodenplatte 27 ist eine zentrale Medienzuführung 30 angeordnet die jeweils Anschlüsse 31, 32, 33, 34, 35 und 36 aufweist, die zu den Medienanschlüssen 20 der jeweiligen Rohre 5 um die jeweiligen Sternsäulen 24 führen. Als Medium zur Bodenkühlung der Behälter kann hier z.B. Wasser verwendet werden.

## Patentansprüche

1. Vorrichtung zum Herstellen von Kunststoffhohlkörpern mittels Streckblasen, aufweisend einen Transporteur (3), der die Flaschen nach dem Blasen mit der Mündung nach oben zu einem Füller (16) transportiert, wobei der Transporteur (3) dazu ausgebildet ist, den Bodenbereich des Kunststoffhohlkörpers zu kühlen und wobei sich im Bereich des Transporteurs (3) unterhalb des Bodens der Behälter mindestens ein Flüssigkeitsrohr (5) befindet, das das Kühlfluid führt, **dadurch gekennzeichnet, dass** die Streckblasmaschine (15), der Füller (16) und der Transporteur (3) synchron miteinander verblockt sind sowie das Flüssigkeitsrohr (5) mit Bohrungen (6) zur Fluidabgabe versehen ist, wobei die Bohrungen (6) eine nicht düsenartige Ausgestaltung aufweisen.

2. Vorrichtung nach Anspruch 1, **dadurch gekennzeichnet, dass** der Transporteur (3) Klammern (26) aufweist, die die Behälter jeweils im Hals- und / oder im Rumpfbereich greifen.

3. Vorrichtung nach wenigstens einem der vorhergehenden Ansprüche, **dadurch gekennzeichnet, dass** die Hohlkörper im Bereich des Transporteurs (3) linear geführt werden.

4. Vorrichtung nach wenigstens einem der vorhergehenden Ansprüche, **dadurch gekennzeichnet, dass** die Hohlkörper im Bereich des Transporteurs (3) mäanderförmig geführt werden.

5. Vorrichtung nach wenigstens einem der vorhergehenden Ansprüche, **dadurch gekennzeichnet, dass** die Klammern (26) an einem Riemen geführt werden.

6. Vorrichtung nach wenigstens einem der vorhergehenden Ansprüche, **dadurch gekennzeichnet, dass** die Klammern (26) an einem Sternrad (25) angebracht sind.

7. Vorrichtung nach wenigstens einem der vorhergehenden Ansprüche, **dadurch gekennzeichnet, dass** die Streckblasmaschine (15) eine Rotationsstreckblasmaschine ist.

8. Vorrichtung nach wenigstens einem der vorhergehenden Ansprüche, **dadurch gekennzeichnet, dass** mindestens zwei, vorzugsweise vier bis sechs Sternräder (25) vorhanden sind, wobei am unteren Ende jedes Sternrades (25) um die Sternsäule (24) je ein kreisförmig gebogenes Rohr (5) angebracht ist.

9. Vorrichtung nach wenigstens einem der vorhergehenden Ansprüche, **dadurch gekennzeichnet, dass** das Rohr (5) vom Behälter einen Abstand von ca. 10 bis 50 cm aufweist.

10. Vorrichtung nach wenigstens einem der vorhergehenden Ansprüche, **dadurch gekennzeichnet, dass** die Form der Bohrungen (5) kreisförmig oder rechteckig ist.

11. Vorrichtung nach wenigstens einem der vorhergehenden Ansprüche, **dadurch gekennzeichnet, dass** die Behälter vom Eingang (17) der Blasmaschine (15) bis zum Ausgang (18) des Füllers (16) jeweils am Halsring gehalten werden.

## Claims

1. An apparatus for manufacturing plastic hollow bodies by stretch blowing, said apparatus comprising a conveyor (3) which, after the blowing process, conveys the bottles with mouth oriented upwards to a filler (16), said conveyor (3) being designed to cool the bottom portion of the plastic hollow body, and at least one liquid pipe (5) carrying the cooling fluid being located in the region of the conveyor (3) underneath the bottom of the container, **characterized in that** the stretch blowing machine (15), the filler (16) and the conveyor (3) are synchronously interlocked, and the liquid pipe (5) is provided with holes (6) for delivering the fluid, said holes (6) having a non-nozzle type configuration.

2. An apparatus according to Claim 1, **characterized in that** the conveyor (3) has clamps (26) which take hold of each of the containers in the region of its neck and/or body.

3. An apparatus according to at least one of the preceding claims, **characterized in that** the hollow bodies are guided in a straight line in the region of the conveyor (3).

4. An apparatus according to at least one of the preceding claims, **characterized in that** the hollow bodies are guided so as to follow a meandering path in the region of the conveyor (3).

5. An apparatus according to at least one of the preceding claims, **characterized in that** the clamps (26) are carried on a belt.

6. An apparatus according to at least one of the preceding claims, **characterized in that** the clamps (26) are mounted on a star wheel (25).

7. An apparatus according to at least one of the preceding claims, **characterized in that** the stretch blowing machine (15) is a rotational stretch blowing machine.

8. An apparatus according to at least one of the preceding claims, **characterized in that** at least two, and preferably four to six, star wheels (25) are provided, a circular curved pipe (5) being fitted respectively at the lower end of each star wheel (25) around the star wheel column (24).

9. An apparatus according to at least one of the preceding claims, **characterized in that** the pipe (5) is at a distance from the container of approximately 10 to 50 cm.

10. An apparatus according to at least one of the preceding claims, **characterized in that** the holes (6) are circular or rectangular in form.

11. An apparatus according to at least one of the preceding claims, **characterized in that**, from the inlet (17) of the blowing machine (15) to the outlet (18) of the filler (16), the containers are each held at the neck ring.

## Revendications

1. Dispositif pour fabriquer des corps creux en matière plastique par soufflage-étirage, comportant :
- un transporteur (3) qui transporte les bouteilles après le soufflage, l'embouchure étant tournée vers le haut, vers un dispositif de remplissage (16),
* le transporteur (3) étant réalisé pour refroidir la zone du fond du corps creux en matière plastique, et
* sous le fond du récipient, dans la zone du transporteur (3), il y a au moins un tuyau de liquide (5) conduisant le liquide de refroidissement,
dispositif **caractérisé en ce que**
- la machine de soufflage-étirage (15), le dispositif de remplissage (16) et le transporteur (3) étant verrouillés en synchronisme et le tuyau de liquide (5) est muni de perçages (6) pour distribuer le fluide,
* les perçages (6) ayant une forme différente de celle d'une buse.

2. Dispositif selon la revendication 1,
**caractérisé en ce que**
le transporteur (3) comporte des pinces (26) qui prennent le récipient respectivement au niveau du col et/ou du corps.

3. Dispositif selon au moins l'une des revendications précédentes,
**caractérisé en ce que**
les corps creux sont guidés de manière linéaire au niveau du transporteur (3).

4. Dispositif selon au moins l'une des revendications précédentes,
**caractérisé en ce que**
les corps creux sont guidés suivant un chemin en méandres au niveau du transporteur (3).

5. Dispositif selon au moins l'une des revendications précédentes,
**caractérisé en ce que**
les pinces (26) sont guidées par une courroie.

6. Dispositif selon au moins l'une des revendications précédentes,
**caractérisé en ce que**
les pinces (26) sont installées sur une roue en étoile (25).

7. Dispositif selon au moins l'une des revendications précédentes,
**caractérisé en ce que**
la machine de soufflage-étirage (15) est une machine de soufflage-étirage rotative.

8. Dispositif selon au moins l'une des revendications précédentes,
**caractérisé par**
au moins deux et de préférence de quatre et six roues en étoile (25),
* l'extrémité inférieure de chaque roue en étoile (25) autour de la colonne en étoile (24) ayant un tube (5) cintré en forme de cercle.

9. Dispositif selon au moins l'une des revendications précédentes,
**caractérisé en ce que**
le tube (5) est écarté du récipient d'une distance d'environ 10 à 50 cm.

10. Dispositif selon au moins l'une des revendications précédentes,
**caractérisé en ce que**
la forme des perçages (5) est circulaire ou rectangulaire.

11. Dispositif selon au moins l'une des revendications précédentes,
**caractérisé en ce que**
les récipients sont tenus au niveau du col de la bouteille entre l'entrée (17) de la machine de soufflage-étirage (15) et la sortie (18) du dispositif de remplissage (16).
